(19) Europäisches Patentamt
European Patent Office
Office européen des brevets

(11) **EP 4 231 474 A1**

(12) **EUROPEAN PATENT APPLICATION**

(43) Date of publication:
**23.08.2023   Bulletin 2023/34**

(21) Application number: **22305193.9**

(22) Date of filing: **22.02.2022**

(51) International Patent Classification (IPC):
*H02J 3/00* (2006.01)   *H02J 3/28* (2006.01)
*H02J 3/38* (2006.01)   *H02J 3/46* (2006.01)
*H02J 3/32* (2006.01)

(52) Cooperative Patent Classification (CPC):
**H02J 3/381; H02J 3/0075; H02J 3/28; H02J 3/466;**
H02J 3/32; H02J 2203/20; H02J 2300/24

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **TotalEnergies OneTech
92400 Courbevoie (FR)**

(72) Inventors:
• **Polleux, Louis
69003 Lyon (FR)**

• **Ghazouani, Sami
93100 Montreuil (FR)**
• **Sandoval Moreno, John
92290 Châtenay-Malabry (FR)**
• **Guerassimoff, Gilles
06904 Sophia Antipolis cedex (FR)**
• **Marmorat, Jean-Paul
06904 Sophia Antipolis cedex (FR)**

(74) Representative: **Bandpay & Greuter
30, rue Notre-Dame des Victoires
75002 Paris (FR)**

(54) **ASSESSING PERFORMANCE OF A POWER PLANT**

(57)     The disclosure notably relates to a computer-implemented method for assessing performance of a power plant. The power plant comprises a solar field system and a storage system. The method comprises providing one or more sets of inputs. Each set of inputs represents a respective architecture of the power plant. The method further comprises computing, for each set of inputs, by a computer system and based on the set of inputs, output data including one or more yearly indicators. For each set of inputs, the computing comprises, for each day of a set of days, optimizing a schedule for the power plant and computing daily indicators for the day. The computing further comprises, for each set of inputs, determining the one or more yearly indicators based on the computed daily indicators. The method forms an improved solution for assessing performance of a power plant.

EP 4 231 474 A1

**Description**

**TECHNICAL FIELD**

The disclosure relates to the field of computer programs and systems, and more specifically to a method, system and program for assessing performance of a power plant comprising a solar field system and a storage system.

**BACKGROUND**

Power plants comprising a solar field system and a storage system are becoming more and more common. Indeed, the demand for renewable energy and for reduction of carbon footprint tends to increase. Within this context, assessing performance of these power plants is gaining wide importance. However, there is still a need for an improved solution for assessing performance of such power plants.

**SUMMARY**

It is therefore provided a computer-implemented method for assessing performance of a power plant. This method for assessing performance of a power plant may be referred to as "the performance assessing method" or "the method". The power plant comprises a solar field system and a storage system. The method comprises providing one or more sets of inputs. Each set of inputs represents a respective architecture of the power plant. The method further comprises computing, for each set of inputs, by a computer system and based on the set of inputs, output data including one or more yearly indicators. For each set of inputs, the computing comprises, for each day of a set of days, optimizing a schedule for the power plant with the architecture of the set of inputs. The computing further comprises, for each day of the set of days, computing daily indicators for the day based on the optimized schedule. The daily indicators include one or more power quality indicators. The computing further comprises, for each set of inputs, determining the one or more yearly indicators based on the computed daily indicators.

The method may comprise one or more of the following:

- the set of days comprises a number of days lower than the number of days of a year and/or representative days in a year;
- the daily indicators include a daily cumulative irradiance indicator, an average spinning reserve requirement indicator and a variability index indicator;
- the method further comprising determining the set of days, the determining of the set of days comprising:

    ○ partitioning a set of days forming a year in a set of clusters based on the daily indicators of the day; and
    ○ computing a center of gravity for each cluster,
    ○ wherein each computed center of gravity corresponds to one day of the determined set of days;

- the partitioning comprises a k-means clustering;
- the set of days comprises a worst-case scenario, the worst-case scenario corresponding to the day of the year having the highest variability index indicator;
- the one or more sets of inputs comprise a plurality of sets of inputs, the computing of the output data further comprising, for each set of inputs:
    ○ determining whether the architecture represented by the set of input is operable based on the determined one or more yearly indicators;
- the method comprises iteratively providing a respective set of inputs and computing respective output data for the respective set of inputs, the method comprising, when it is determined at a current iteration that the architecture represented by the current set of inputs is not operable, the set of inputs provided at the next iteration representing a modification of the architecture of the current iteration by reducing a power capacity of the solar field system and/or increasing a storage capacity of the storage system;
- the one or more yearly indicators include:

    ○ a fuel consumption indicator, the determining of the fuel consumption indicator optionally comprising an occurrence-weighted sum of corresponding daily indicators;
    ○ a $CO_2$ emission indicator, the determining of the $CO_2$ emission indicator optionally comprising an occurrence-weighted sum of corresponding daily indicators;
    ○ a frequency variation indicator;
    ○ a minimum frequency indicator; and/or

∘ an indicator of cumulated time of frequency disturbances; and/or

- the computing of the daily indicators comprises:

    ∘ discretizing the day in a set of intervals, each interval comprising an average profile of the power generated by the solar field system; and
    ∘ iteratively for each interval of the set:

        ▪ optimizing a dispatch of the power plant based on the average profile of the interval; and
        ▪ simulating grid dynamics in the power plant for the optimized dispatch.

It is further provided a computer implemented method for upgrading a real-world power plant. This method for upgrading a real-world power plant may be referred to as "the upgrading method". The upgrading method comprises performing the method for assessing performance with the real-world power plant, thereby computing respective one or more yearly indicators for each set of inputs. The one or more sets of inputs comprise several sets of inputs. The upgrading method comprises selecting one of the one or more sets of inputs based on the computed respective one or more yearly indicators for each set. Optionally, the upgrading method may further comprise, in the real-world power plant, integrating the architecture represented by the selected set of inputs in the power plant. Alternatively or additionally, the upgrading method may further comprise, in the real-world power plant, performing an improvement of an existing architecture of the power plant based on the architecture represented by the selected set of inputs.

It is further provided a computer-implemented method for designing a power plant having an architecture. This method for designing a power plant may be referred to as "the designing method". The power plant comprises a solar field system and a storage system. The designing method comprises performing the method for assessing performance with the power plant, thereby computing respective one or more yearly indicators for each set of inputs. The one or more sets of inputs comprise several sets of inputs. The designing method comprises selecting one of the one or more sets of inputs based on the computed respective one or more yearly indicators for each set, thereby determining an architecture for the power plant. The selected set of inputs represents the determined architecture.

It is further provided a computer program comprising instructions for performing the method for assessing performance of a power plant, the method for upgrading a real-world power plant and/or the method for designing a power plant comprising a solar field system.

It is further provided a device comprising a data storage medium having recorded thereon the computer program.

The device may form or serve as a non-transitory computer-readable medium, for example on a SaaS (Software as a service) or another server, or a cloud-based platform, or the like. The device may alternatively comprise a processor coupled to the data storage medium. The device may thus form a computer system in whole or in part (e.g., the device is a subsystem of the overall system). The system may further comprise a graphical user interface coupled to the processor.

## BRIEF DESCRIPTION OF THE DRAWINGS

Non-limiting examples will now be described in reference to the accompanying drawings, where:

- FIG. 1 illustrates an example of implementation of the method;
- FIG. 2 illustrates an example of performance evaluation of hybrid architectures based on the multi-layer simulation;
- FIG. 3 illustrates an example of determining the set of days;
- FIG. 4 illustrates an example of determining the operability of an architecture;
- FIG. 5 shows an example of computing the variability index indicator;
- FIG.s 6 to 10 illustrate an example of determining the set of days; and
- FIG. 11 shows an example of the system.

## DETAILED DESCRIPTION

It is provided a computer-implemented method for assessing performance of a power plant. This method for assessing performance of a power plant may be referred to as "the performance assessing method" or "the method". The power plant comprises a solar field system and a storage system. The method comprises providing one or more sets of inputs. Each set of inputs represents a respective architecture of the power plant. The method further comprises computing, for each set of inputs, by a computer system and based on the set of inputs, output data including one or more yearly indicators. For each set of inputs, the computing comprises, for each day of a set of days, optimizing a schedule for the power plant with the architecture of the set of inputs. The computing further comprises, for each day of the set of days, computing daily indicators for the day based on the optimized schedule. The daily indicators include one or more power quality indicators. The computing further comprises, for each set of inputs, determining the one or more yearly indicators based on the computed daily indicators.

The method forms an improved solution for assessing performance of a power plant.

Notably, the method allows objectively assessing performance of the power plant for one or more architectures of the power plant. Indeed, each set of inputs represents an architecture, and the method computes, for each set of inputs, one or more yearly indicators determined based on computed daily indicators. Notably, the daily indicators include the one or more power quality indicators and are computed, for each day of a set of days, based on a schedule for the power plant which is optimized according to each architecture. The method therefore allows objectively computing performance, including power quality, of the power plant according to the architecture of the power plant, which allows, e.g., in combination with a cost, to take objective decisions with respect to a real-world power plant, such as upgrading the real-world power plant or designing a power plant that may be later built in the real-world.

Furthermore, the assessing of the performance of the power plant is carried out automatically by a computer system. This allows for a deterministic and accurate computation of the one or more yearly indicators, e.g., as opposed to ground-truth based estimations. Furthermore, this allows a user, e.g., an engineer or a designer of the power plant, to obtain the performance of the power plant without tedious efforts: the user provides the inputs, and the computer automatically computes the one or more yearly indicators. This makes the method ergonomic.

The one or more sets of inputs may consist in several sets of inputs, i.e., the method may be repeated for several sets of inputs, i.e., executed several times, each time for a different set of inputs. The method may for example be automatically iterated for several sets of inputs representing different architectures (e.g., comprising various sizes of solar field systems and/or storage systems), the method determining its output(s) automatically for all the sets of inputs. The method may thereby assess the one or more yearly indicators for various architectures of the power plant, i.e., each corresponding to a different set of inputs, and compare these various architectures one to another. This allows to determine an optimal architecture and/or to take objective decisions with respect to the power plant. The method may thereby be used in a method for upgrading a real-world power plant, and/or in a method for designing a power plant.

It is further provided a computer implemented method for upgrading a real-world power plant. The method for upgrading a real-world power plant may be referred to as "the upgrading method". The upgrading method comprises performing the method for assessing performance with the real-world power plant, thereby computing respective one or more yearly indicators for each set. The one or more sets of inputs comprise several sets of inputs. The upgrading method comprises selecting one of the one or more sets of inputs based on the computed respective one or more yearly indicators for each set. Optionally, the upgrading method may further comprise, in the real-world power plant, integrating the architecture represented by the selected set of inputs in the power plant. Alternatively or additionally, the upgrading method may further comprise, in the real-world power plant, performing an improvement of an existing architecture of the power plant based on the architecture represented by the selected set of inputs.

The upgrading method uses the results of the performance assessing method to upgrade a real-world power plant, i.e., a power plant which already exists in the real-world, based on a selection of an architecture for the power plant represented by a set of inputs. For example, the method may determine the set of inputs, among all sets, that optimizes the operation of the power plant, e.g., with respect to the optimized schedule and the power quality.

The upgrading method may notably use the results of the performance assessing method to determine an architecture for the power plant. For example, the power plant may not currently comprise a solar field system and/or a storage system, and the upgrading method may determine the solar field system and/or the storage system to be installed on the power plant. In that case, the upgrading method may determine the size of the solar field system and/or the storage system to be installed on the power plant and assess the performance (e.g., the power quality) of the power plant after the installation. Alternatively, the power plant may already comprise an existing architecture (i.e., a solar field system and/or a storage system may already exist in the power plant), and the upgrading method may comprise performing an improvement of the existing architecture. The improvement may comprise increasing or decreasing a power capacity of the solar field system and/or increasing or decreasing a storage capacity of the storage system, such that the power plant comprises, after the improvement, the architecture represented by the selected set of inputs (which is optimal and has an optimal power capacity and/or an optimal storage capacity, e.g., maximizing the power quality). Regarding the power capacity, the increasing or decreasing of the power capacity may comprise adding or removing one or more solar panels in the solar field system. The number of solar panels to be added may be one or more additional solar panels to be integrated on the existing solar field system, e.g., because the current number of solar panels of the existing solar field system is lower than in the optimal architecture. The increasing or decreasing of the power capacity may also comprise replacing one or more existing solar panels (e.g., all) with one or more solar panels of another type. Regarding the storage capacity, the increasing or decreasing of the storage capacity of the storage system may comprise adding or removing one or more components of the storage system (e.g., one or more battery modules), or replacing the storage system with a new storage system having a storage capacity corresponding to the computed optimal storage capacity.

The upgrading method may then, physically in the power plant, comprise the integration of the architecture represented by the selected set of inputs in the power plant (i.e., the installation of the solar field system and the storage system). For example, the upgrading method may comprise accessing, by a user, the results of the performance assessing method. The upgrading method may then comprise the user, based on the determined one or more yearly indicators (e.g., for several sets of inputs), selecting, in accordance with a set of inputs for which the power quality and/or CO2 savings are sufficiently (e.g., optimal, optionally also with respect to a minimization of the cost). The upgrading method may then comprise (e.g., by the same user and/or by one or more other users, e.g., engineers and/or workers), physically in the power plant, installing the solar field system and the storage system.

Alternatively, the upgrading method may use the results of the performance assessing method to determine an improvement of the existing architecture of a power plant, and may then physically in the power plant, comprise the performing of this improvement. For example, the upgrading method may comprise accessing, by a user, the results of the performance assessing method. The upgrading method may then comprise by the user, based on the determined one or more yearly indicators (e.g., for several sets of inputs), selecting, in accordance with a set of inputs for which the power quality is sufficiently (e.g., optimal, e.g., also with respect to the minimization of the cost). The upgrading method may then comprise (e.g., by the same user and/or by one or more other users, e.g., engineers and/or workers), physically in the power plant improving the current solar field system, by performing one or more of: adding one or more new solar panels, removing one or more existing solar panels, replacing one or more existing solar panels with one or more solar panels of another type, adding one or more new components of the storage system (e.g., battery modules), removing one or more components of the storage system (e.g., battery modules) and/or replacing the storage system with a new storage system having a new storage capacity.

It is further provided a computer-implemented method for designing a power plant having an architecture. This method for designing a power plant may be referred to as "the designing method". The power plant comprises a solar field system and a storage system. The designing method comprises performing the method for assessing performance with the power plant, thereby computing respective one or more yearly indicators for each set. The one or more sets of inputs comprise several sets of inputs. The designing method comprises selecting one of the one or more sets of inputs based on the computed respective one or more yearly indicators for each set, thereby determining an architecture for the power plant. The selected set of inputs represents the determined architecture.

The design method uses the results of the performance assessing method to design a power plant comprising a solar field system and a storage system, i.e., that may be later built further to the completion of the design. The design involves the determination of the solar field system and the storage system of the power plant (e.g., the power capacity of the solar field system and/or the storage capacity of the storage system), based on the results of the performance assessing method, and optionally also on the cost. This determination may be automatic, e.g., to optimize the power capacity and/or the storage capacity for optimizing (e.g., maximizing) power quality and/or CO2 savings with cost constraints (such as minimum cost or cost below a threshold). Alternatively, this determination may involve a user, e.g., an engineer or a designer, performing this determination, e.g., based on the results of the performance assessing method, on technical specificities or constraints of the power plant and/or on the cost. For example, the determination may comprise a user selecting a power capacity for the solar field system and/or a storage capacity providing for the storage system such that the power quality is optimal, or at least efficient, and/or CO2 savings are sufficient (optionally also with respect to the cost). The design method may thus use the results of the performance assessing method to guide a user, e.g., an engineer or a designer, in the design of the real-world power plant. The design method allows a user to design the power plant, by choosing a power capacity for the solar field system and/or a storage capacity providing for the storage system with constraints on power quality, CO2 savings and/or cost.

The cost is an indicator of the efficiency of the power plant. It may capture a cost of material and in manufacturing, conception and/or installation of the solarfield system. The cost allows to avoid oversizing (which could lead to overproduction), i.e., to avoid increasing the size of solar field system in such a manner that the global efficiency of the power plant to save CO2 decreases. This cost captures the fact that only a limited amount of material and/or space may be available to maximize CO2 savings. For example, CO2 savings cannot in practice be maximized by always increasing the number of panels in the solar field system, because it is in practice impossible to add an unlimited number of solar panels, due to space and/or material constraints. For example, the size of the available roof (or of any sunlight space) may limit the size of the solar field system. Thus, the number of solar panels that may be installed can be limited by architectural constraints of the power plant. On the other hand, the installation of an oversized solar field system can be inefficient in terms of CO2 savings, because of the losses generated by the storage, for example for the sunniest days for which the production would be higher than the real need. The design method thus allows to balance CO2 savings with the material/technical cost necessary to obtain these savings. The cost may comprise one or more components each representing a cost variable of a sizing of the power plant.

The design method further comprises determining, based on the computed one or more yearly indicators and on the cost, a power capacity for the solar field system and/or a storage capacity of the storage system. For example, the one or more sets of inputs may consist in several sets and the user may select the set of inputs among the sets which, e.g., represents an optimal balance between power quality, CO2 savings and the cost. Alternatively, the determining of the power capacity and/or the storage capacity may comprise automatically by a computer system, selecting, based on each computed one or more yearly indicators and on the cost and on a criterion of maximization of CO2 savings, an optimal architecture for the power system (i.e., a power capacity for the solar field system and/or a storage capacity for the storage system that optimizes the operating of the power plant). In other words, the design method may comprise an automatic selection of an optimal architecture for the power plant, to balance optimally CO2 savings, power quality and/or the cost.

The performance assessing method is now further discussed.

The performance assessing method is a method for assessing the performance of a power plant comprising a solar field system and a storage system. The power plant may be an industrial site or an individual property. The performance assessing method outputs one or more yearly indicators, based on inputs representing an architecture of the power plant. The one or more yearly indicators are determined based on daily indicators including one or more power quality indicators. These daily indicators are computed for each day of a set of days, and based on a schedule for the power plant, which is optimized according to each architecture, as further discussed hereinafter.

The performance assessing method comprises the provision of one or more sets of inputs. For each set of inputs, the provision may comprise retrieving at least a part (e.g., all) of the inputs from a (e.g., distant) memory or database where said at least a part is stored. Additionally or alternatively, the performance assessing method may comprise forming at least a part (e.g., all) of the inputs, for example by measuring them and/or processing existing data (e.g., including measurements).

The provision of the one or more sets of inputs may be partially performed with user interactions. For example, the provision of the one or more sets of inputs may comprise, for each set, selecting, upon user interaction, the inputs of the set. The selection of the inputs of the set may comprise selecting a power capacity for the solar field system and/or a storage capacity for the storage system.

Alternatively or additionally, the provision of the one or more sets of inputs may be partially automated. For example, the provision may comprise selecting one or more inputs of the set of inputs with user interactions (e.g., a user may enter each input using the graphical user interface and a keyboard) and automatically determining one or more other inputs of the set of inputs. For example, the user may enter a power capacity for the solar field system, and the method may automatically determine a number of panels for the solar field system to meet the inputted power capacity. Alternatively or additionally, the user may enter a storage capacity for the storage system, and the method may automatically determine a number of battery modules for the storage system to meet the inputted storage capacity. The determination may comprise retrieve from a database solar field parameters such as a power capacity computation equation for one or more solar panel technologies (e.g., at least one fixed panel technology and/or at least one panel technology based on a tracking system) and/or parameters of battery modules.

The provision is performed for one or more sets of inputs, e.g., several sets of inputs.

Any (e.g., each) set of inputs represents an architecture of the power plant. The set of inputs comprises technical data describing the architecture of the power plant. The set of inputs may comprise one or more sub-set of inputs each representing a respective component of the power plant. For example, the set of inputs may include a first sub-set of inputs representing the solar field system and/or a second sub-set of inputs representing the storage system. Each sub-set of inputs may comprise one or more inputs each representing a respective technical feature of the component. For example, the first sub-set may comprise an input representing the size of the solar field system (e.g., a power capacity or a number of solar panels). The power capacity may correspond to the power generated by the solar field system. The first sub-set may further comprise one or more other inputs each representing another technical feature of the solar field system (e.g., a number and/or type of solar panels comprised by the solar field system). The second sub-set may comprise an input representing the size of the storage system (e.g., a storage capacity). The storage capacity may correspond to the energy that the storage system can store. The second sub-set may further comprise one or more other inputs each representing another technical feature of the storage system (e.g., a storage system type, a number of battery modules and/or a type of battery modules comprised by the storage system). The set of inputs may also include other data representing the power plant, such as meteorological data and panel features for different solar panel types. The set of inputs may also include data representing the operation of the power plant, such as power plant equipment data (e.g., grid data and/or machine data) or power plant financial data.

For each set of inputs, further to the provision of the set of inputs, the performance assessing method computes, based on the set of inputs, output data including the one or more yearly indicators. The computation is carried out automatically by a computer system executing the performance assessing method. For example, a user may launch the computation, e.g., by a graphical user interaction (e.g., a click) on a dedicated portion of a graphical user interface of the computer system, and then the computer system performs the computation. The performance assessing method may for example comprise displaying the output(s) to the user in the graphical user interface, e.g., in one or more tables.

The output data include, for each set of inputs, one or more yearly indicators. A yearly indicator is an indicator that includes information (e.g., on operation or performance) about the power plant over a year. The yearly indicator may include information about an energy performance (e.g., a power quality) or industrial maintenance of the power plant (any specification relative to one or more maintenance events, such as with respect to ageing considerations). The one or more yearly indicators may include a fuel consumption, a CO2 emission, a frequency variation indicator, a minimum frequency indicator, an indicator of cumulated time of frequency disturbances and/or an operability of the power plant. The operability of the power plant may depend on the power quality of the power plant. For example, the operability may depend on whether a limitation is met over the year, such as a minimum frequency limitation or a voltage limitation.

The one or more yearly indicators are based on the computed daily indicators. A daily indicator is an indicator that includes information (e.g., on operation or performance) about the power plant for one day of the set of days. The daily indicator may include information about an energy performance (e.g., a power quality) or industrial maintenance of the power plant. Examples of daily indicators include a fuel consumption, a CO2 emission, a minimum frequency and/or a voltage.

The determination of the one or more of the yearly indicators may comprise computing an occurrence-weighted sum of one or more daily indicators. In that case, the one or more daily indicators may each have a respective algebraic value. For example, one of the daily indicators may be a fuel consumption and may have a value representing the fuel consumption of the power plant, and one of the yearly indicators may correspond to an occurrence-weighted sum of the fuel consumption (i.e., with respect to the days of the set). The occurrence-weighted sum of the fuel consumption may correspond to the sum, for each day of the set of days, of a product of an occurrence of the day and the value of the fuel consumption of the power plant calculated for that day. Similarly, one of the daily indicators may be a CO2 emission and may have a value representing the quantity of CO2 emitted by the power plant, and one of the yearly indicators may correspond to an occurrence-weighted sum of the CO2 emission (e.g., the sum, for each day of the set of days, of a product of the occurrence of the day and the CO2 emission calculated for that day).

The determination of the one or more of the yearly indicators may comprise assessing whether, for each day of the set of days, one or more daily indicators meet a limitation. For example, the determining of the operability may comprise assessing whether, for each day of the set of days, the minimum frequency and/or the voltage is higher or lower than a threshold.

For each set of inputs, the computing comprises, for each day of the set of days, optimizing a schedule for the power plant with the architecture of the set of inputs. The optimization of the schedule may be performed semi or fully automatically. The optimization may comprise determining openings and/or closings of components of the power plant during the day. The architecture defines the size of the components considered during the optimization (e.g., number of battery modules of the storage system). The components of the power plant may include one or more energy management systems and/or one or more energy storage systems. The one or more energy management systems may include one or more fossil generators and/or one or more solar field systems. The optimization may comprise minimizing a cost associated with one or more operating variables of the power plant, such as a produced energy, a quantity of material consumed, CO2 emissions or the cost.

In examples, the set of days may comprise a number of days lower than the number of days of a year. Alternatively or additionally, the set of days may comprise representative days in a year. The days of the set may be representative with respect to the daily indicators. For example, representative days may correspond to days with one or more particular values of daily indicators, for example maximum/minimum and/or average values. Each day of the set may be representative of a respective sub-set of days of the year. For example, each day of the sub-set may have daily indicators having values that are similar and/or match those of each other day in the sub-set (and also those of the day of the set which represents the sub-set).

In example, the daily indicators may include a daily cumulative irradiance indicator, an average spinning reserve requirement indicator and a variability index indicator. The daily cumulative irradiance indicator may represent a daily cumulative irradiance per unit of surface $E_d$ (expressed in kWh/m$^2$). The daily cumulative irradiance per unit of surface $E_d$ may be calculated by summing up the hourly average irradiance $I_h$. The calculation of the daily cumulative irradiance per unit of surface $E_d$ may be based on the following equation:

$$E_d = \sum_{h=0}^{24} I_h$$

The average spinning reserve indicator may represent an average value of a difference between an average hourly sunshine value and its minimum value. The average spinning reserve indicator may represent an average spinning reserve requirement $SPres_{avg}$. The average spinning reserve requirement $SPres_{avg}$ may be calculated by calculating a mean value of the maximum difference between hourly average PV power $PV_h$ and 1-second PV power $PV_t$. The calculation of the average spinning reserve requirement $SPres_{avg}$ may be based on the following equation:

$$SPres_{avg} = \frac{1}{24} \sum_{h=1}^{24} \max_{t \in [h, \; h+3600]} (\overline{PV_h} - PV_t)$$

The variability index indicator may correspond to a ratio between a curve length of the irradiance profile measured at 1 second and a curve length of the irradiance averaged at 1 hour. The variability index indicator may be used to evaluate the level of short-term variability. The variability index indicator may be calculated as the ratio of 1-second GHI profile's curve length ($GHI_k$) over the hourly-average GHI profile's curve length ($GHI_h$), according to the following equation:

$$VI = \frac{\sum_{k=0}^{tf} \sqrt{(GHI_k - GHI_{k-1})^2 + \Delta t^2}}{\sum_{h=0}^{h_f} \sqrt{(\overline{GHI_h} - \overline{GHI_{h-1}})^2 + 3600^2}}$$

wherein $\Delta t$ = 1 *seconds* and $t_f$ is the total length of the one second profile ($t_f = h_f * 3600$).

In examples, the method may further comprise determining the set of days. The determining of the set of days may comprise partitioning a set of days forming a year in a set of clusters based on the daily indicators of the day. The determining of the set of days may comprise computing a center of gravity for each cluster. The day of the set may have values of daily indicators associated with the center of gravity. Each computed center of gravity may thus correspond to one day of the determined set of days. The partitioning may comprise a k-means clustering.

In examples, the set of days may comprise a worst-case scenario. The worst-case scenario may correspond to the day of the year having the highest variability index indicator. The determining of the set of days may comprise, for each day of the year, determining the variability index indicator of the day and, based on values of the determined variability index indicator, selecting the day of the year having the highest variability index indicator (referred to as the worst-case scenario). The addition of the worst case in the set of days improves the performance assessing by allowing to consider isolated particular days.

In examples, the one or more sets of inputs may comprise a plurality of sets of inputs. In that case, each set of inputs may represent a different architecture. The computing of the output data may further comprise, for each set of inputs, determining whether the architecture represented by the set of inputs is operable based on the determined one or more yearly indicators. The determining of whether the architecture is operable may comprise determining, for each yearly indicator, whether the value of that indicator corresponds to a value that allows the power plant to operate (e.g., according to a minimum frequency or voltage limitation).

In examples, the method may comprise iteratively providing a respective set of inputs and computing respective output data for the respective set of inputs. For each iteration, the provided set of input may have an architecture that depends on the architecture of the set of input previously provided, and on the operability of this the set of input previously provided. The method may comprise, when it is determined at a current iteration that the architecture represented by the current set of inputs is not operable, the set of inputs provided at the next iteration representing a modification of the architecture of the current iteration. For example, the modification of the architecture may comprise reducing a power capacity of the solar field system. Alternatively or additionally, the modification of the architecture may comprise increasing a storage capacity of the storage system. For the next iteration, and when the previous architecture is not operable, the provided set of input may thus have an architecture having a lower power capacity and/or a higher storage capacity. Having a lower power capacity and/or a higher storage capacity increase improves operability and reduces the risk of getting an architecture that is not operable and/or having poor power quality. Thus, when an architecture is considered inoperable, the next iteration can consider an architecture with a solar field system with a reduced power capacity and/or a storage system with a reduced storage capacity. This improves the convergence of the method towards operable architectures, for example more electrically stable.

In examples, the computing of the daily indicators may comprise discretizing the day in a set of intervals. Each interval may comprise an average profile of the power generated by the solar field system. The computing of the daily indicators may further comprise, iteratively for each interval of the set, optimizing a dispatch of the power plant based on the average profile of the interval and simulating grid dynamics in the power plant for the optimized dispatch. The optimizing of the dispatch may reproduce operational decisions made by an energy management system. This step may consist in taking decisions for fossil generators operating status, fossil generators power output and Photo Voltaic power curtailment. The simulation of grid dynamics may comprise integrating a 600 second time-slice of a 1 second irradiance profile (e.g., in a software such as matlab or simulink). The integration may reproduce electrical perturbations brought by the solar field system (e.g., a Photo Voltaic system). The simulation may model frequency dynamics based on differential equations of a power system. The simulation may implement a control strategy to simultaneously track optimal setpoints computed at a dispatch layer and keep the frequency shift within industrial specifications (e.g., defined by the user).

With reference to FIG.s 1 to 4, examples of implementation of the method are now discussed.

Oil and gas production fields may run isolated from utility grid. In power plant, the electricity may be produced by dual-fuel equipment (gas and oil). Generators of power plant may comprise one or more gas turbines and, optionally, one or more internal combustion engines. The electricity supply of petroleum installations may be continuous (24 hours a day, 7 days a week) and reliable for safety. Hybrid power plants projects may integrate MW-scale PV power plants in order to reduce its $CO_2$ emission and energy consumption. This integration may comprise installing Photo Voltaic (PV) panels (e.g., several megawatts of PV panels) on an existing fossil-based power plant as well as a storage system for solar intermittency management. In a project development process, the method may comprise assessing the performance of the hybrid power plant in order to find an optimal solution. The assessing of the performance may comprise accurately evaluating one or more of the following aspects. The evaluation may consider lifetime environmental performance, for example thanks to an evaluation of fuel consumption and associated $CO_2$ emission. The evaluation may consider an electrical stability of a grid. In hybrid power plant, this evaluation may consider short-term variability of the solar field system (e.g., the Photo Voltaic system. The stability of the system may depend on the installed PV capacity, the dynamic performances of fossil units and the size of the storage system. The evaluation may consider capital expenditures for PV power plant and storage system.

The method may comprise evaluating, for a given installed PV and storage capacity, fuel consumption and $CO_2$ emission, which allows to evaluate global indicators (such as levelized costs of electricity, net present value or $CO_2$ abatement costs). The method may also comprise evaluating electrical stability (and thus operability of architectures). Indeed, the method integrates short-term electrical dynamics in the simulation of the power plant. This allows the method to guarantee an operability of the proposed solutions and to accurately evaluate needs in storage capacity dedicated to intermittency management.

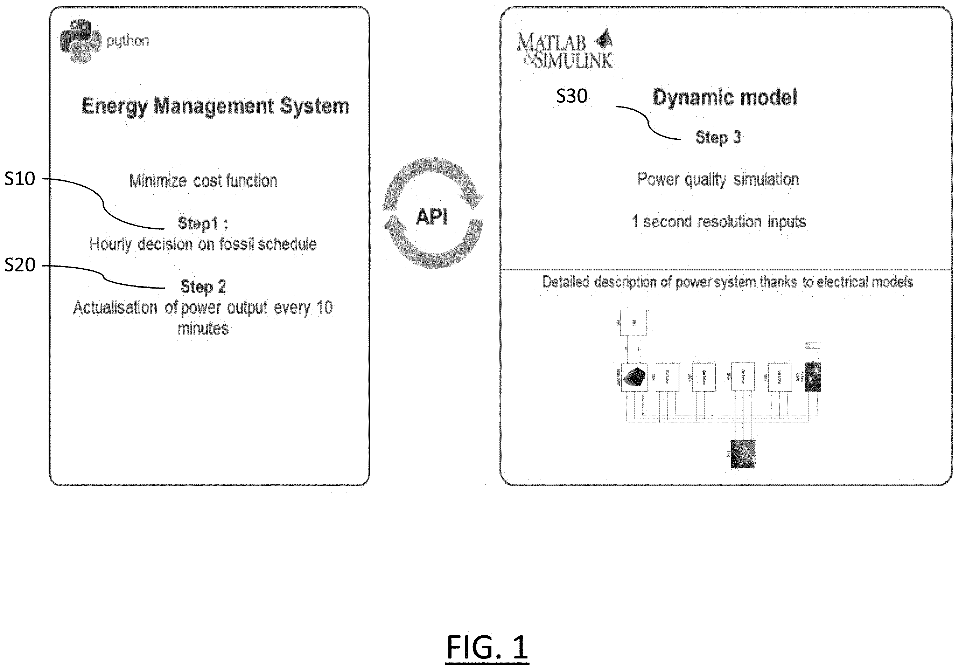

FIG. 1 illustrates an example of implementation of the method. In this example, the computing of the output data comprises executing a multi-layer simulation of the power plant to reproduce a decision process as it would be conducted in real-life operation. The multi-layer simulation uses two programming environments (an energy management system and a dynamic model) for performing simultaneously the optimizing of the schedule (steps S10 and S20 for the simulation of fuel consumption) and the computing (step S30) of daily indicators (such as the power quality). For an industrial power plant, the day-ahead management is expected to be conducted based on the following three steps. In the step S10, the method comprises processing the schedule of fossil generators depending on needs, availability and costs. This step may be performed according to standard high-level energy models and allows to optimize fuel consumption and $CO_2$ emission depending on forecasts. In the step S20, as the PV production and load demand vary over the day, the computing comprises re-processing the commitment of each machine with updated values. The processing may comprise sending these values as new power setpoints to the fossil generators. In the step S30, the method may comprise re-adjusting in real-time the power output to ensure adequacy between electrical generation and demand and keep frequency and voltage within acceptable limits. The step S30 may comprise simulating, based on a dynamic model of the power plant, grid dynamics and ensuring a dispatch of generating units.

The steps S10 and S20 may comprises conventional optimization techniques. The step S30 may be performed according to model-based simulation techniques with a detailed description of the components. The computing may comprise executing a coupling interface to simultaneously simulate steps S10, S20 and S30.

The multi-layer simulation simulates the behavior of the hybrid power plant over 1 day of operation thanks to high-resolution profile. The outputs comprise, firstly, a fuel consumption and a $CO_2$ emission, secondly, an injected PV power and used PV energy and, thirdly, a grid voltage and frequency.

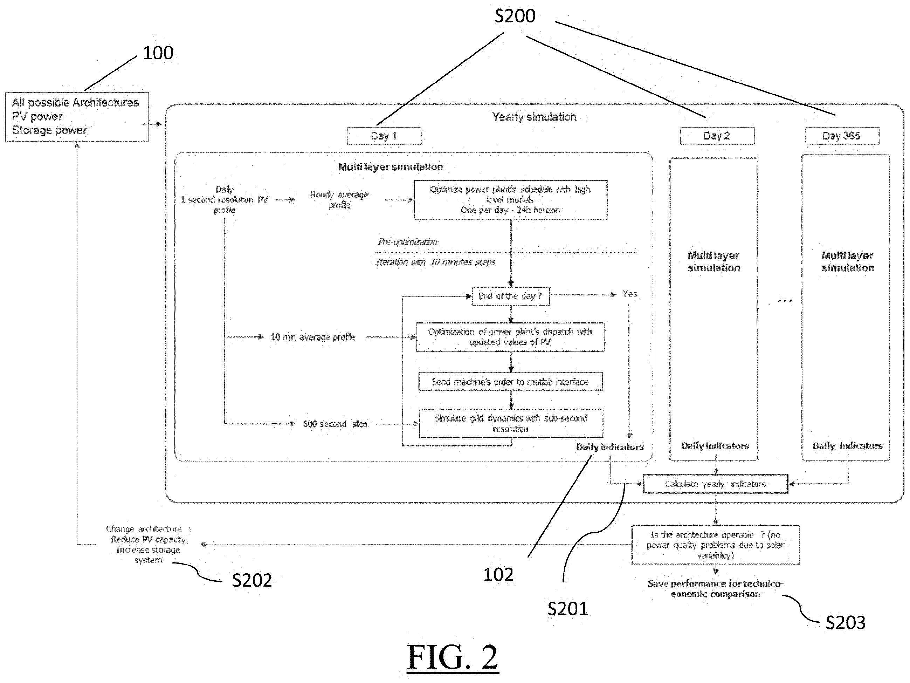

FIG. 2 illustrates an example of performance evaluation of hybrid architectures based on the multi-layer simulation. In this example, the method comprises iteratively providing a respective set of inputs and computing respective output data for the respective set of inputs. To carry a technical evaluation of a hybrid project, the method evaluates multiple possible architectures 100 with varying capacities of PV (panel or system) and storage. The method comprises simulating S200 each architecture throughout the 365 days of a year 101 and aggregating S201 daily indicators 102 to construct yearly indicators. If power quality problems are observed, the method comprises considering S202 the architecture as non-operable and eliminating this architecture from a possible solution set. Then, the method comprises considering a new architecture with either less PV capacity or higher storage capacity. If no power quality problems are observed, the method comprises saving S203 the results of the architecture. After the observation of the architectures, the method comprises comparing the results of all operable architectures to find an architecture representing an technical optimum.

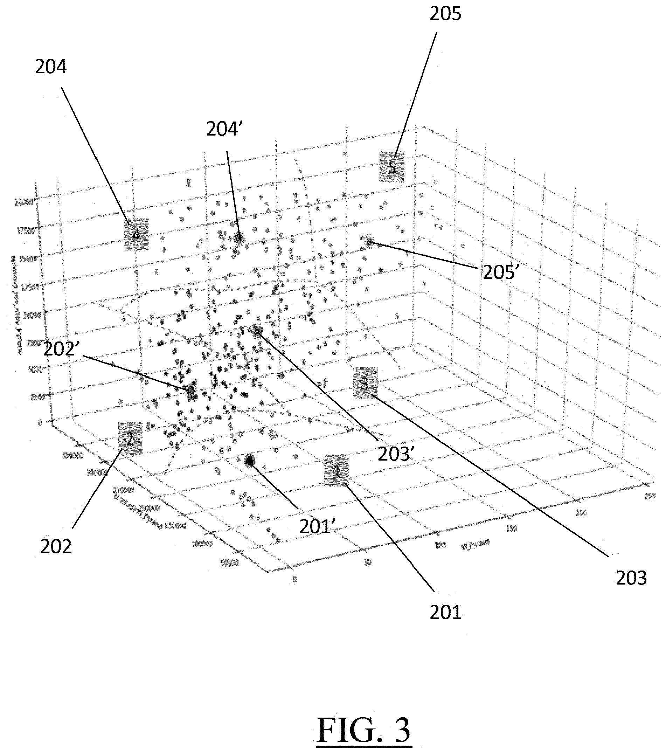

In the example of FIG. 2, the set of days thus comprises 365 days. In other examples, such as in the example of FIG. 3, the set of days may comprise representative days (i.e., the number of days of the set may be lower than 365) and the method may use a scenario-reduction technique. This allows to speed-up the simulation process and a quick simulation of many architectures. The use of the scenario-reduction technique consists in using a reduced number of daily timeseries instead of the yearly dataset composed of 365 days.

FIG. 3 illustrates an example of determining of the set of days. In this example, the method uses an input reduction technique which comprises both a worst-case approach and a k-means clustering to identify a set of representative days. In a first step, the method comprises computing, for each day, daily indicators, thereby determining dataset. The daily indicators include daily the cumulative irradiance indicator, the average spinning reserve requirement indicator and the variability index indicator. In a second step, the method comprises identifying scenarios. The identifying of scenarios comprises, first, identifying a worst-case scenario. The identifying a worst-case scenario comprises selecting the day having the highest daily variability index indicator over the dataset. Then, the identifying of scenarios comprises identifying a set of five representative days in the dataset. The identifying of the set of five representative days may comprise partitioning the dataset according to a k-means clustering algorithm. The method may comprise selecting these five representative days to be the closest elements of the centers of gravity of each cluster. FIG. 3 shows the five clusters 201, 202, 203, 204 and 205 resulting from the k-means application on a yearly dataset, and the center of gravity of each cluster (respectively 201', 202', 203', 204' and 205'). In this example, the method thus considers a set of 6 days to replace the 365 timeseries for the simulation (the identified worst-case scenario and the determined five representative days).

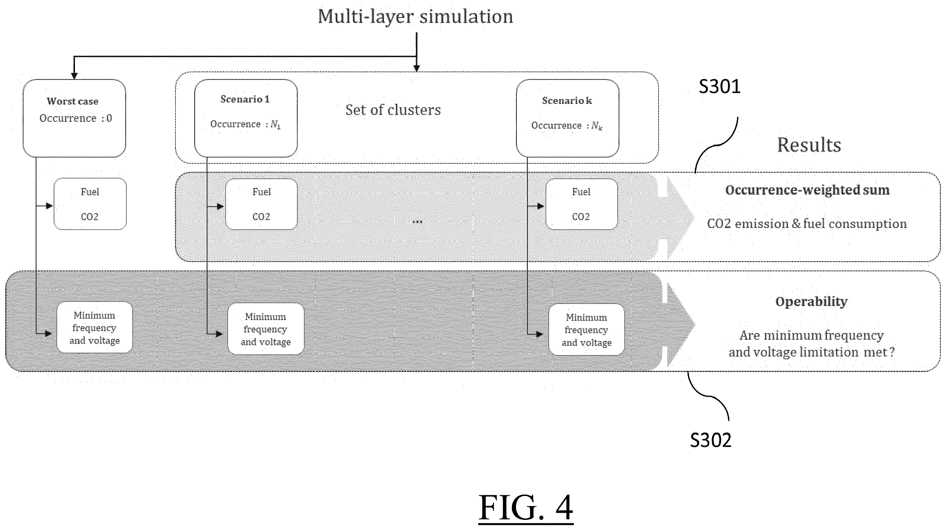

FIG. 4 illustrates an example of determining whether the architecture represented by the set of input is operable. In this example, the method simulates the 6 scenarios previously discussed based on the multi-layer simulation (i.e., $k = 6$ in the figure). In other example, the method may simulate any number of scenarios k, as shown in the figure. The method comprises calculating global indicators. The calculation of the global indicators comprises calculating S301 the fuel consumption and the $CO_2$ emission based on a weighted sum which uses the number of elements of each cluster. The calculation only uses representative days from the clustering. The method further comprises investigating S302 the operability of the system over the five clustered days and the worst-case day. If power quality issues are detected, the method comprise considering the architecture as unfeasible. The use of the scenario reduction allows reducing the simulation time by a factor of 60. It also allows to perform parallel computing on standard computer thanks to the limited number of simulations per architecture.

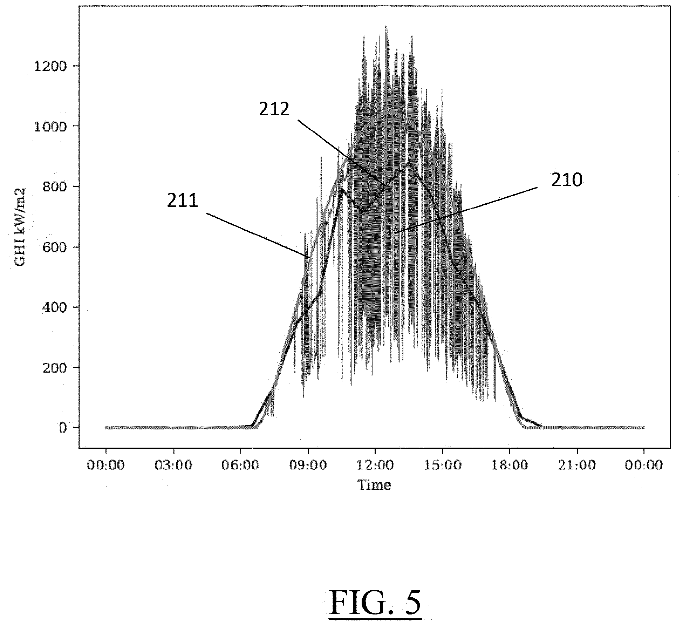

FIG. 5 shows an example of computing of the variability index indicator. The computing of the variability index indicator comprises calculating a ratio of the length of the pyranometer global horizontal irradiance (GHI) measurement curve 210 ("Pyranometer GHI") over the length of the clear-sky irradiance (CSI) curve 211 ("Clear Sky GHI"). The clear sky irradiance may be computed thanks to a clear-sky model, such as the Ineichen model. The method may use Hourly averaged irradiance values 212 ("Hourly averaged GHI") instead of clear-sky irradiance. This avoids the use of clear-sky irradiance models and simplifies the data preparation process for further internal use in preliminary studies. The method may compute the original formulation of the variability index indicator $VI^{stein}$ according to the following equation:

$$VI^{stein} = \frac{\sum_{t=t_0}^{t_f} \sqrt{(GHI_{t+1} - GHI_t)^2 + \Delta t^2}}{\sum_{t=t_0}^{t_f} \sqrt{(CSI_{t+1} - CSI_t)^2 + \Delta t^2}}$$

wherein $GHI_t$ is the measured irradiance and $CSI_t$ is the clear sky irradiance.

The method may compute the VI based on hourly averaged irradiance, e.g., using the following expressions:

$$VI = \frac{L_{GHI}}{L_{\overline{GHI}}}$$

wherein $L_{GHI}$ and $L_{\overline{GHI}}$ are the curve lengths of the pyranometer measurements 210 and hourly averaged irradiance 212 respectively.

The method may comprise computing curve lengths based on the following equations:

$$L_{GHI} = \sum_{t=t_0}^{t_f} \sqrt{(GHI_{t+1} - GHI_t)^2 + \Delta t^2}$$

$$L_{\overline{GHI}} = \sum_{h=h_0}^{h_f} \sqrt{(\overline{GHI}_{h+1} - \overline{GHI}_h)^2 + 3600^2}$$

wherein $GHI_h$ is the hourly averaged irradiance between h and h + 1.

With reference to FIG.s 6 to 10, an example of the determination of the set of days is now discussed.

The method performs a worst-case approach, which allows a robust sizing but may also lead to high costs architectures. The optimization process for architecture sizing benefits from considering more than one worst-case scenario and account for various situation such as cloudy days with low solar penetration.

Identifying a set of representative (typical) days of irradiance allow increasing the level of accuracy of the results while keeping the computation time to a reasonable value. The method comprises aggregating representative days to capture solar and load seasonal variations. Artificial intelligence (AI) clustering techniques may be used. The method aims at forming a group of data called "cluster" in which all the elements share close characteristics called "features". The method comprises using hourly averaged PV profile to generate input scenarios. Short-term characteristics are expected to have a large impact on architectures. Thus, the method may use additional new criteria into the aggregation process.

The method may comprise performing a scenario reduction to account for solar profile stochastic behavior. The scenario reduction may comprise using a clearness index (ratio between measured irradiance and clear-sky irradiance) to qualify daily profiles and applying a K-means clustering method to generate representative scenarios. The clearness index may not fully represent the short-term variability because it may not address the sharpness of the solar drops. In that case, the variability index previously discussed may be used as a feature for scenario generation. This allows considering short-term variability in the clustering process.

In a first step, the method comprises identifying daily indicators by analyzing how solar timeseries characteristics impact the objectives and constraints of the power plant. Firstly, the method may use daily cumulated irradiance to calculate and maximize fuel savings in most sizing and operational management formulation. Secondly, the method may use variations between forecast values and actual irradiance to calculate the spinning reserve requirement. Due to minimum and maximum power ratings of engines, the use of the spinning reserve requirement forces to limit the PV penetration, which allows reducing the profitability of the system. Thirdly, the magnitude and gradient of solar drops impact the real-time stability of the system by adding electrical perturbation within an equation of motion of the power system. The sizing of mitigation technologies (storage, fast-responding fossil units or load shedding) directly depends on frequency deviations.

Table 1 below summarizes the selected indicators in this example.

Table 1

| System objective/constraint | Timeseries characteristic | Indicator |
|---|---|---|
| Minimization of fuel consumption | Daily cumulative irradiance | $E_{l_d}$ |
| Spinning reserve requirement | Maximum gap between hourly averaged irradiance and real irradiance value | $\overline{Rlh}_d$ |
| Frequency deviation | Sharpness of the timeseries | $VI_d$ |

The cumulative irradiance indicator is now discussed. The method comprises a sizing and an operational management formulation according to the following equation:

$$\forall h \quad P_{L_h} = P_{gen_h} + P_{bat_h} + P_{PV_h}$$

wherein fossil units $P_{gen_h}$, storage system $P_{bat_h}$ and renewable resources $P_{PV_h}$ balance the hourly electrical load demand $P_{L_h}$.

The method may also use the following equation:

$$P_{PV_h} = W_{PV} * \overline{GHI_{d,h}} * [1 - K_\theta(\theta - 25)]$$

wherein the higher is the irradiance, the lower is the fuel consumption and the battery requirement. In this equation, $W_{PV}$

is the PV installed power capacity, $GHI_{d,h}$ is the hourly averaged global horizontal irradiance, $K_\theta$ is the PV panel temperature derating factor and $\theta$ is the temperature.

$$\sum_h FC_h$$

$$E_{I_d} = \sum_{h=0}^{24} \overline{GHI_{d,h}}$$

$$\overline{GHI_{d,h}} = \frac{\sum_{t=1}^{3600} GHI_{d,h,t}}{3600}$$

It allows providing a first indicator for the timeseries clustering. $GHI_{d,h}$ denotes a mean value (in kW/m$^2$) between h and h + 1 for a day d.

The spinning reserve requirement indicator is now discussed. When performing the power plant schedule, operators may allocate sufficient power margin to cover the difference between hourly PV forecast $P_{PV_h}$ and a real-time PV production $P_{PV_t}$. If PV power variations are larger than the total operational margin of fossil units and storage system, the stability of the system and the continuity of electricity supply may not be guaranteed. The method may calculate the spinning reserve requirement based on the following equation:

$$\sum_{gen} P_{gen}^{max} - P_{gen_h} + P_{bat}^{max} - P_{bat_h} \geqslant R_{PV_h}$$

wherein $R_{PV_h}$ accounts for the risk of PV variation within the hourly time interval h. In a deterministic approach, the method may evaluate $R_{PV}$ by estimating a highest difference between the forecast value $P_{PV_h}$ and a real value $P_{PV_t}$ at each timestep t based on the following equation:

$$R_{PV_h} = \max_t(P_{PV_h} - P_{PV_t})$$

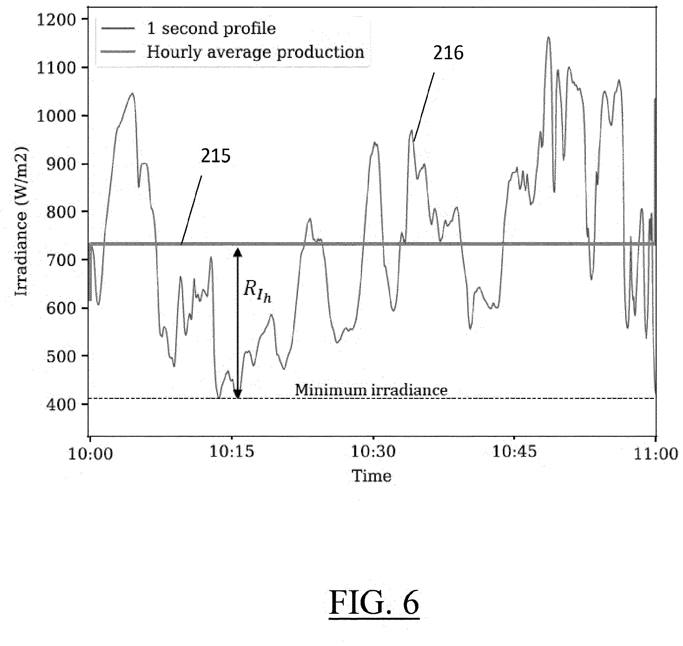

The computing may comprise expressing the spinning reserve requirement as a function of irradiance variations based on the following equation (as illustrated in FIG. 6):

$$R_{I_{d,h}} = \max_{t \in [h, h+3600]}(\overline{GHI_{d,h}} - GHI_{d,t})$$

FIG. 6 illustrates the calculation of $R_{I_h}$ in an hourly interval. The figure shows the evolution over time of the 1 second profile 216 and the hourly average production 215. The method comprises selecting a daily mean value of $R_{I_{d,h}}$ for the spinning reserve requirement indicator based on the following equation:

$$\overline{R_{I_h}}_d = \sum_{h^0}^{h^f} R_{I_{d,h}}$$

wherein $h^\circ$ and $h^f$ are the daylight starting and ending time (5am and 8pm in this example).

The risk of power quality degradation is now discussed. The method comprises assessing the relationship between power quality degradation and irradiance variability. The method may compute a frequency shift as a function of incremental power variation $\Delta P$ based on the following equation:

$$\frac{d\Delta f}{dt} = \frac{\sum_{gen} \Delta P_{gen} + \Delta P_{PV} + \Delta P_{bat} - \Delta P_L}{M}$$

In this equation, the variation $\Delta P_{PV}$ over a short period dt has an impact on the power quality.

The method may comprise performing a correlation between daily VI and solar ramps. Thus, the method may use the VI as daily indicator in order to characterize the level of sub-minute variability.

The K-means clustering is now discussed.

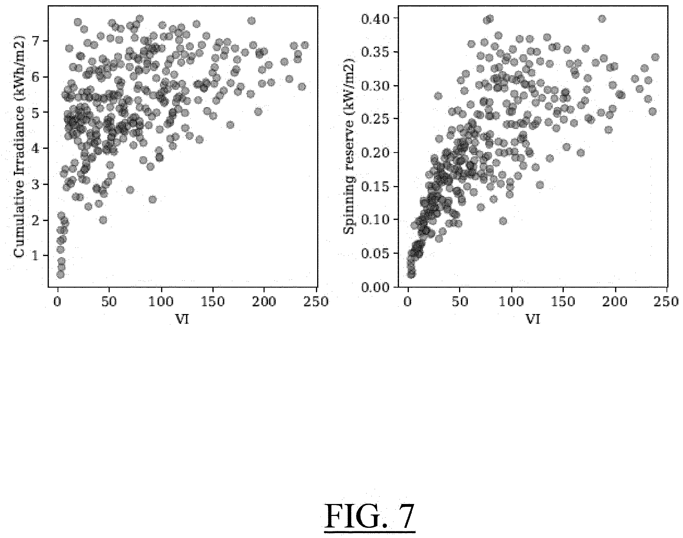

FIG. 7 illustrates an example of calculation of daily indicators. FIG. 7 shows repartitions of each day of the dataset over the selected features. When no clear separation appears in the data, the method may comprise using AI technique to separate the data into clusters and extract representative scenarios. For example, the method may use a K-means algorithm to aggregate data. The K-means algorithm may rely on a minimization of distances between the element of a group and the center of gravity of the group.

In a first step, the method comprises normalizing the feature so that distances in each dimension are in a same order of magnitude. The method may compute the normalized indicator value $X_d^{norm}$ of a day d based on the following equation:

$$X_d^{norm} = \frac{X_d}{X_d^{max}}$$

The K-mean clustering comprises dividing the dataset in a defined number of clusters $N^{cluster}$.

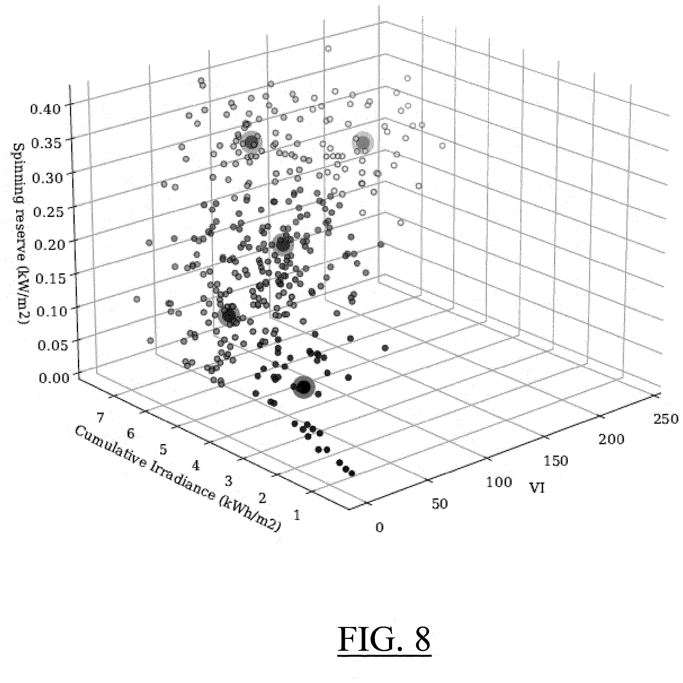

FIG. 8 shows an example of clustering in 5 clusters (with $N^{cluster} = 5$). Five clusters categorized by the K-mean algorithm. Black dots highlight the computed centers of gravity of each cluster.

The method may comprise building the reduced set of scenarios by selecting closest elements to centers of gravity. The method may comprise using the following equations, which define the representative scenario y° of cluster σ as the timeseries with the minimal distance $Di^\sigma$ to its center of gravity:

$$D_i^\sigma = \sqrt{\sum_j \left( x_{i,j}^\sigma - G_j^\sigma \right)}$$

$$D_y^\sigma = \min_i D_i^\sigma$$

wherein $G_j\sigma$ denotes coordinates of the center of gravity in dimension j and may be expressed based on the following equation:

$$G_j^\sigma = \frac{\sum_{i=1}^{N^\sigma} x_{i,j}^\sigma}{N^\sigma}$$

wherein $N^\sigma$ denotes the number of elements in the cluster k and $x_{i,j}^\sigma$ the coordinate of the element i in the dimension j.

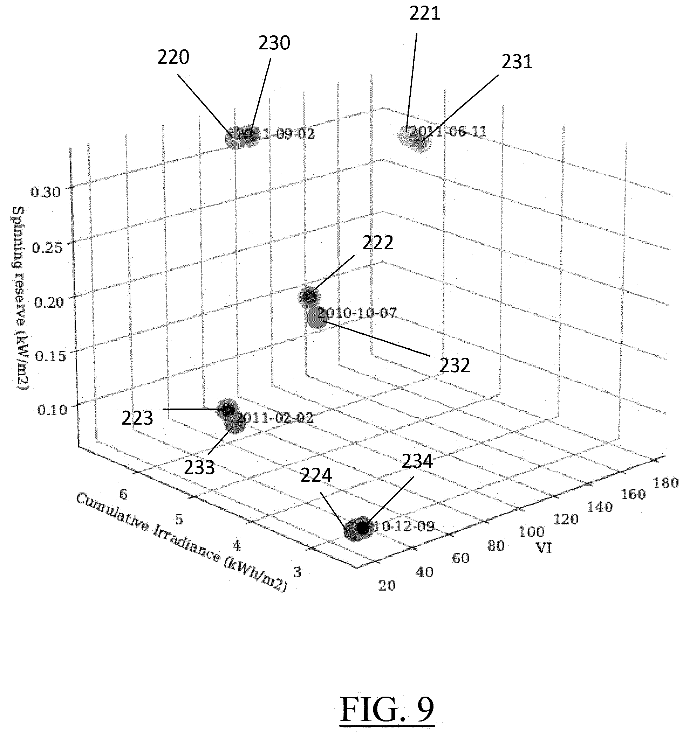

FIG. 9 illustrates the centers of gravity of the five clusters as well as their closest elements labelled by their dates. The figure shows the five clusters categorized by the K-mean clustering, the centers of gravity 230, 231, 232, 233, 234 and the closest elements of the cluster 220, 221, 222, 223, 224 which are chosen as representative scenario.

The selection of best performing setup is now discussed. The K-mean clustering may comprise defining (e.g., by the user) the number of clusters $N^{cluster}$ that should be chosen according to the simulation and in best compliance with the behavior of the whole dataset. For example, the method may use a small number of clusters to limit the computation time of future simulations.

Table 2 below provides an example of comparison of weighted average values.

Table 2

| Feature Unit | Cumulative irradiance kWh/m$^2$ | VI - | Average spinning reserve requirement kW/m$^2$ |
|---|---|---|---|
| 4 clusters | 5.06 | 73.09 | 0.20 |
| 5 clusters | 5.17 | 73.37 | 0.19 |
| 6 clusters | 5.18 | 76.71 | 0.20 |
| 7 clusters | 5.21 | 75.40 | 0.20 |
| Average value of 365 days | 5.19 | 74.54 | 0.20 |

The method computes the weighted average values $X_j^{kmeans}$ based on the following equation:

$$\overline{X_j}^{kmeans} = \frac{\sum_\sigma x_j^\sigma N^\sigma}{365}$$

Table 2 reports the weighted average values $X_j^{kmeans}$ for a number of clusters varying from 4 to 7 and compares it to the averaged indicators value over 365 days. All results show a relevant compliance with less than 1% of error apart from the 4-cluster setup which reports an error of 0.14kWh/m2 for the cumulative irradiance.

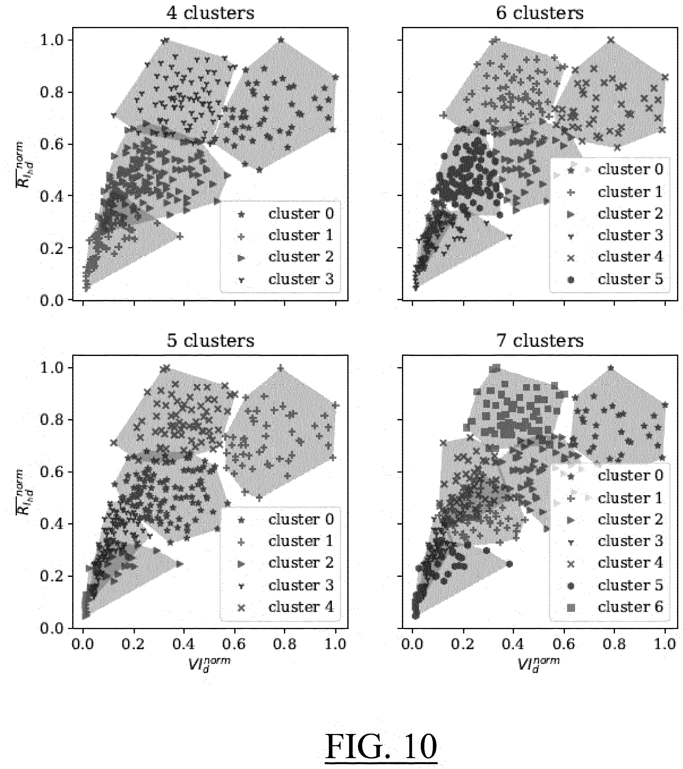

FIG. 10 shows an example of group repartition for cluster numbers varying from 4 to 7. The figure shows the repartition of clusters as function of normalized $VI_d$ and mean $R_{lhd}$. In configurations with 6 and 7 clusters, areas of low irradiance and low spinning reserve are mixed up which means that the corresponding representative scenarios may be equivalent in terms of variability. In this case, the K-mean clustering with five clusters shows the best compromise.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g., one for the program, and possibly one for the database).

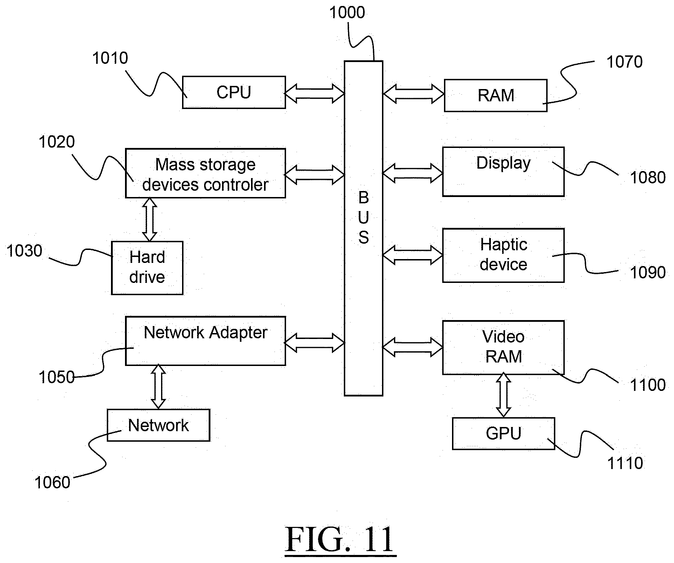

FIG. 11 shows an example of the system, wherein the system is a client computer system, e.g., a workstation of a user.

The client computer of the example comprises a central processing unit (CPU) 1010 connected to an internal communication BUS 1000, a random-access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard, or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

**Claims**

1. A computer-implemented method for assessing performance of a power plant comprising a solar field system and a storage system, the method comprising:

   • providing one or more sets of inputs, each set of inputs representing a respective architecture of the power plant; and
   • computing, for each set of inputs, by a computer system and based on the set of inputs, output data including one or more yearly indicators, the computing comprising, for each set of inputs:

      ▪ for each day of a set of days:

         ○ optimizing a schedule for the power plant with the architecture of the set of inputs; and
         ○ computing daily indicators for the day based on the optimized schedule, the daily indicators including one or more power quality indicators; and

      ▪ determining the one or more yearly indicators based on the computed daily indicators.

2. The method of claim 1, wherein the set of days comprises a number of days lower than the number of days of a year and/or representative days in a year.

3. The method of claim 2, wherein the daily indicators include a daily cumulative irradiance indicator, an average spinning reserve requirement indicator and a variability index indicator.

4. The method of claim 2 or 3, the method further comprising determining the set of days, the determining of the set of days comprising:

   • partitioning a set of days forming a year in a set of clusters based on the daily indicators of the day; and
   • computing a center of gravity for each cluster,

   wherein each computed center of gravity corresponds to one day of the determined set of days.

5. The method of claim 4, wherein the partitioning comprises a k-means clustering.

6. The method of any one of claims 1 to 5, wherein the set of days comprises a worst-case scenario, the worst-case scenario corresponding to the day of the year having the highest variability index indicator.

7. The method of any one of claims 1 to 6, wherein the one or more sets of inputs comprise a plurality of sets of inputs, the computing of the output data further comprising, for each set of inputs:

   • determining whether the architecture represented by the set of input is operable based on the determined one or more yearly indicators.

8. The method of claim 7, wherein the method comprises iteratively providing a respective set of inputs and computing respective output data for the respective set of inputs, the method comprising, when it is determined at a current iteration that the architecture represented by the current set of inputs is not operable, the set of inputs provided at the next iteration representing a modification of the architecture of the current iteration by reducing a power capacity of the solar field system and/or increasing a storage capacity of the storage system.

9. The method of any one of claims 1 to 8, wherein the one or more yearly indicators include:

   • a fuel consumption indicator, the determining of the fuel consumption indicator optionally comprising an occurrence-weighted sum of corresponding daily indicators;
   • a $CO_2$ emission indicator, the determining of the $CO_2$ emission indicator optionally comprising an occurrence-weighted sum of corresponding daily indicators;
   • a frequency variation indicator;
   • a minimum frequency indicator; and/or
   • an indicator of cumulated time of frequency disturbances.

10. The method of any one of claims 1 to 9, wherein the computing of the daily indicators comprises:

   • discretizing the day in a set of intervals, each interval comprising an average profile of the power generated by the solar field system; and
   • iteratively for each interval of the set:

     ▪ optimizing a dispatch of the power plant based on the average profile of the interval; and
     ▪ simulating grid dynamics in the power plant for the optimized dispatch.

11. A computer implemented method for upgrading a real-world power plant comprising a solar field system and a storage system, the method comprising:

   - performing the method of any one of claims 1 to 10, the one or more sets of inputs comprising several sets of inputs, thereby computing respective one or more yearly indicators for each set; and
   - selecting one of the one or more sets of inputs based on the computed respective one or more yearly indicators for each set,

   wherein optionally the method further comprises, in the real-world power plant:

   - integrating the architecture represented by the selected set of inputs in the power plant; and/or
   - performing an improvement of an existing architecture of the power plant based on the architecture represented by the selected set of inputs.

12. A computer-implemented method for designing a power plant comprising a solar field system and a storage system, the method comprising:

   - performing the method of any one of claims 1 to 10, the one or more sets of inputs comprising several sets of inputs, thereby computing respective one or more yearly indicators for each set; and
   - selecting one of the one or more sets of inputs based on the computed respective one or more yearly indicators for each set, thereby determining an architecture for the power plant, the selected set of inputs representing the determined architecture.

13. A computer program comprising instructions for performing the method of any of claims 1-12.

14. A computer readable storage medium having recorded thereon a computer program of claim 13.

15. A system comprising a processor coupled to a memory and a graphical user interface, the memory having recorded thereon the computer program of claim 13.

FIG. 1

EP 4 231 474 A1

100 — All possible Architectures
PV power
Storage power

S200

Yearly simulation

Day 1   Day 2   ...   Day 365

**Multi layer simulation**

Daily 1-second resolution PV profile → Hourly average profile → Optimize power plant's schedule with high level models — One per day - 24h horizon

Pre-optimization
Iteration with 10 minutes steps

End of the day ? → Yes

Optimization of power plant's dispatch with updated values of PV

Send machine's order to matlab interface

Simulate grid dynamics with sub-second resolution

10 min average profile
600 second slice

**Daily indicators**   102

**Multi layer simulation**   **Multi layer simulation**

Daily indicators   Daily indicators

Calculate yearly indicators   S201

Is the architecture operable ? (no power quality problems due to solar variability)

**Save performance for technico-economic comparison**   S203

Change architecture :
Reduce PV capacity
Increase storage system   S202

## FIG. 2

FIG. 3

Multi-layer simulation

| Worst case | Scenario 1 | Set of clusters | Scenario k |
|---|---|---|---|
| Occurrence : 0 | Occurrence : $N_1$ | | Occurrence : $N_k$ |

S301

Results

| | Fuel | Fuel | ... | Fuel | **Occurrence-weighted sum** |
|---|---|---|---|---|---|
| | $CO_2$ | $CO_2$ | | $CO_2$ | $CO_2$ emission & fuel consumption |

| | Minimum frequency and voltage | Minimum frequency and voltage | Minimum frequency and voltage | **Operability** |
|---|---|---|---|---|
| | | | | Are minimum frequency and voltage limitation met ? |

S302

## FIG. 4

FIG. 5

FIG. 6

FIG. 7

FIG. 8

FIG. 9

FIG. 10

FIG. 11

**EP 4 231 474 A1**

Europäisches
Patentamt

European
Patent Office

Office européen
des brevets

# EUROPEAN SEARCH REPORT

Application Number

EP 22 30 5193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 10 230 241 B1 (RULE EVAN T [US] ET AL) 12 March 2019 (2019-03-12) | 1-8,10, 13-15 | INV. H02J3/00 |
| A | * figures 10, 11 * <br> * column 7, line 35 - column 12, line 3 * | 9,11,12 | H02J3/28 H02J3/38 H02J3/46 |
| Y | US 2015/331972 A1 (BROWN D; BROWN D I ET AL.) 19 November 2015 (2015-11-19) | 1-8,10, 13-15 | ADD. |
| A | * paragraphs [0002], [0284] * | 9,11,12 | H02J3/32 |
| A | POLLEUX LOUIS ET AL: "On the relationship between battery power capacity sizing and solar variability scenarios for industrial off-grid power plants", APPLIED ENERGY, ELSEVIER SCIENCE PUBLISHERS, GB, vol. 302, 16 August 2021 (2021-08-16), XP086768393, ISSN: 0306-2619, DOI: 10.1016/J.APENERGY.2021.117553 [retrieved on 2021-08-16] * the whole document * | 1-15 | |

TECHNICAL FIELDS
SEARCHED (IPC)

H02J

The present search report has been drawn up for all claims

| Place of search | Date of completion of the search | Examiner |
|---|---|---|
| Munich | 21 July 2022 | Berger, Josef |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 30 5193

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2022

| Patent document cited in search report | | Publication date | Patent family member(s) | | Publication date |
|---|---|---|---|---|---|
| US 10230241 | B1 | 12-03-2019 | NONE | | |
| US 2015331972 | A1 | 19-11-2015 | EP | 3167529 A1 | 17-05-2017 |
| | | | US | 2015331972 A1 | 19-11-2015 |
| | | | WO | 2015175923 A1 | 19-11-2015 |

For more details about this annex : see Official Journal of the European Patent Office, No. 12/82

EPO FORM P0459